# DEMANDE DE BREVET EUROPEEN

(11) **EP 1 065 431 A1**
(43) Date de publication de la demande: **03.01.2001**
(21) Numéro de dépôt: 00401205.0
(22) Date de dépôt: 02.05.2000
(51) Int. Cl.: F17C 9/02

(54) **Dispositif de réglage de pression pour un réservoir cryogénique et installation de fourniture de fluide correspondante**

(30) Priorité: 08.06.1999 FR 9907190
(71) Demandeur: L'air Liquide Société Anonyme pour l'étude et l'exploration des procédés Georges Claude, 75321 Paris Cédex 07 (FR); L'AIR LIQUIDE S.A., 75321 Paris Cédex 07 (FR)
(72) Inventeur: Cohu, Antoine, 38420 Le Versoud (FR)
(74) Mandataire: Le Moenner, Gabriel

(57) **Abrégé**

Ce dispositif comprend une chambre de chauffage (36) fermée s'étendant à travers la paroi (3, 4, 5) du réservoir et reliée à cette paroi, une conduite d'alimentation (22) adaptée pour alimenter la chambre de chauffage (36) avec un fluide de chauffage ayant une température supérieure à la température du fluide cryogénique, et une conduite d'échappement (23) destinée à l'évacuation du fluide de chauffage, chacune desdites conduites (22, 23) traversant une paroi extérieure (20) de la chambre de chauffage (36).

Application notamment à la fourniture d'hélium ultra-pur.

## Description

La présente invention concerne un dispositif de réglage de pression pour un réservoir d'un fluide cryogénique, notamment d'hélium, qui comprend une chambre de chauffage fermée s'étendant à travers la paroi du réservoir et reliée à cette paroi.

Elle concerne en outre une installation de fourniture de fluide à partir d'un réservoir cryogénique.

L'invention s'applique par exemple à la distribution d'hélium ultra-pur pour l'industrie microélectronique.

Les réservoirs cryogéniques possèdent une isolation thermique très efficace. Lorsqu'on soutire du gaz d'un tel réservoir, la pression, qui est typiquement de quelques bars relatifs, baisse parce que les entrées de chaleur sont trop faibles pour compenser la perte de fluide. Par suite, quand on soutire du gaz, la pression dans le réservoir peut baisser excessivement vis-à-vis des besoins du réseau utilisateur.

Pour maintenir la pression constante dans le réservoir, il faut apporter de la chaleur dans le réservoir lors du soutirage.

Dans ce but, on connaît des dispositifs de réglage de pression pour des réservoirs cryogéniques qui utilisent une résistance électrique comme élément chauffant, en combinaison avec des moyens de sécurité électriques en cas de coupure de courant. Cependant, les solutions connues sont onéreuses dans le cas où l'alimentation électrique de secours doit pouvoir fonctionner sur une longue durée.

L'invention a pour but de fournir un dispositif économique de réglage de pression qui puisse fournir de la chaleur à un réservoir cryogénique pendant une longue durée. L'invention doit en outre garantir la non-pollution du contenu du réservoir, même en cas de fluides ultra-purs.

A cet effet, l'invention a pour objet un dispositif de réglage de pression, caractérisé en ce qu'il comprend une conduite d'alimentation adaptée pour alimenter la chambre de chauffage avec un fluide de chauffage ayant une température supérieure à la température dudit fluide cryogénique, et une conduite d'échappement destinée à l'évacuation du fluide de chauffage, chacune desdites conduites traversant une paroi extérieure de la chambre de chauffage.

Le dispositif suivant l'invention peut comporter une ou plusieurs des caractéristiques suivantes prises isolément ou suivant toutes leurs combinaisons techniquement possibles :
- le dispositif comprend une vanne pilotée insérée dans la conduite d'alimentation et reliée par sa partie de commande à une conduite d'utilisation du fluide du réservoir de façon à ouvrir la vanne pilotée lorsque la pression dans le réservoir tombe au-dessous d'un seuil prédéterminé ;
- le dispositif comprend des seconds moyens de chauffage, notamment des résistances électriques ;
- les seconds moyens de chauffage sont insérés dans la chambre de chauffage, de préférence au voisinage de la sortie de la conduite d'alimentation ;
- un manchon d'isolation est ménagé sur la paroi intérieure du réservoir, autour d'une section médiane de la chambre de chauffage, divisant la chambre de chauffage en une zone extérieure isolée et une zone intérieure non-isolée ;
- la sortie de la conduite d'alimentation se trouve dans la zone non-isolée, au voisinage de l'extrémité intérieure de la chambre de chauffage ;
- l'entrée de la conduite d'échappement se trouve dans la zone non-isolée, au voisinage de la zone isolée ;
- la conduite d'échappement est revêtue de moyens d'isolation thermique, qui s'étendent de l'extérieur de la chambre de chauffage à travers sa paroi extérieure et sensiblement jusqu'à l'entrée de cette conduite ;
- le gaz de chauffage a, dans ses conditions d'utilisation, un point de rosée inférieur à la température du fluide cryogénique contenu dans le réservoir ;
- le fluide cryogénique et le gaz de chauffage sont constitués par de l'hélium ; et
- les conduites sont composées d'un matériau mauvais conducteur thermique, notamment de résine époxy.

L'invention a également pour objet une installation de fourniture d'un fluide, comprenant un réservoir pour ce fluide sous forme cryogénique, équipé d'un dispositif de chauffage tel que défini ci-dessus, une conduite d'utilisation reliant le réservoir à un poste d'utilisation, et une source de gaz de chauffage reliée par une conduite d'alimentation au dispositif de chauffage.

L'invention sera mieux comprise à la lecture de la description qui va suivre, donnée uniquement à titre d'exemple et faite en se référant aux dessins sur lesquels :

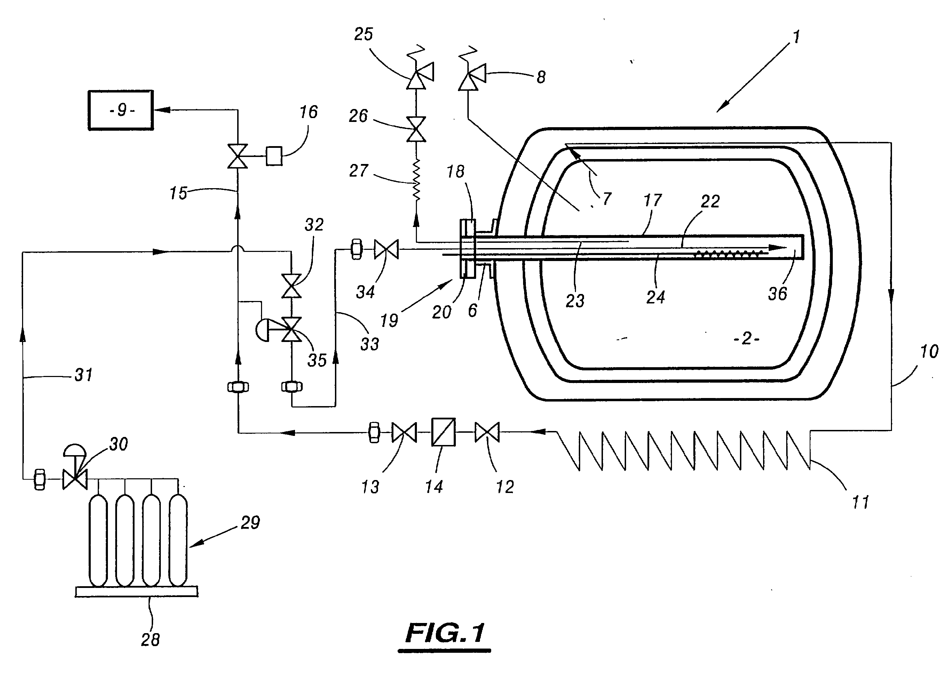

- la Figure 1 est une vue schématique d'une installation de fourniture d'hélium suivant l'invention ; et
- la Figure 2 est une vue en coupe longitudinale à plus grande échelle du dispositif de réglage de pression relié au réservoir cryogénique.

Le réservoir cryogénique 1 contient de l'hélium 2 à l'état supercritique, à une très basse température typiquement comprise entre 4 et 45 K. Il est d'un type connu et constitué par des parois extérieure 3, intérieure 4 et médiane 5 qui sont espacées les unes des autres, les espaces étant remplis de matériau bon isolateur thermique et mis sous vide. La paroi médiane 5 comporte de plus des moyens qui permettent de la refroidir par le fluide sortant du réservoir lors du soutirage.

Le réservoir comporte un col 6 pour le dispositif de chauffage, une conduite de soutirage 7 et une soupape de sécurité 8. Le réservoir 1 est relié à un poste d'utilisation 9 par l'intermédiaire, successivement, de la conduite de soutirage 7, d'une conduite intermédiaire 10, d'un réchauffeur atmosphérique 11, de deux vannes 12, 13 entre lesquelles est prévu un filtre 14, et d'une conduite d'utilisation 15. Cette dernière est équipée d'une vanne d'utilisation 16 qui commande le soutirage d'hélium. Cette vanne a une construction telle que lorsqu'il y a une coupure de courant, elle est en position de passage.

Un doigt de gant 17 s'étend à travers le col 6 et les parois 3, 4, 5 du réservoir 1. Il est muni à son entrée d'une bride 18 fixée à l'entrée du col 6. Dans le doigt de gant 17 est introduit un dispositif de chauffage 19 muni d'une bride de fermeture 20 qui se fixe de façon amovible sur la bride 18 au moyen de boulons 21. Des conduites d'alimentation 22 et d'échappement 23 s'étendent à travers la bride 20, ainsi qu'une canne de chauffage électrique 24.

Une soupape d'évacuation 25 est reliée par l'intermédiaire d'une vanne d'évacuation 26 et d'un serpentin réchauffeur 27 à la conduite d'échappement 23.

Un cadre 28 supporte des bouteilles d'hélium de chauffage 29 à la température ambiante qui sont reliées par l'intermédiaire d'un détendeur 30 et d'une conduite 31 à une vanne 32. Dans la conduite 33 qui relie la vanne 32 à une vanne d'alimentation 34 de la conduite d'alimentation 22 est inséré une vanne 35 à dôme piloté. Son dôme est relié à la conduite 15 de façon telle que quand la pression dans la conduite 15 passe au-dessous d'un certain seuil, la vanne 35 s'ouvre, permettant à du gaz de chauffage de passer dans la conduite 33.

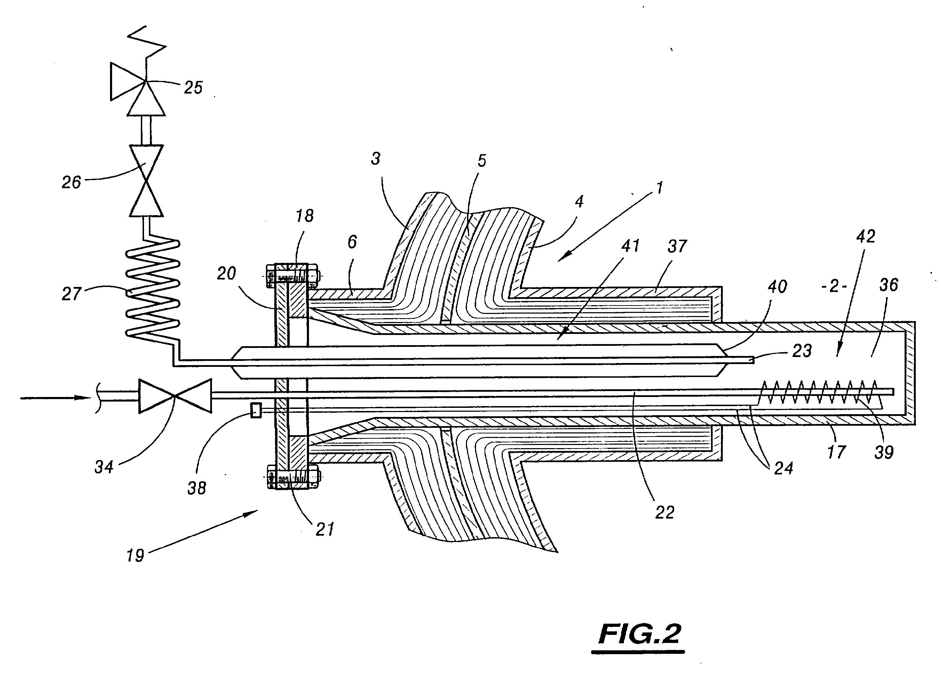

La Figure 2 montre de façon plus détaillée un mode de réalisation du dispositif utilisé pour le réglage de pression.

La chambre de chauffage 36 est délimitée par le doigt de gant 17, la bride du réservoir 18 et la bride de fermeture 20 formant paroi extérieure. Un manchon d'isolation 37 qui est relié à la paroi intérieure 4 du réservoir 1 entoure une partie du doigt de gant 17. La conduite d'alimentation 22, à laquelle est raccordée la vanne d'alimentation 34, traverse la bride 20 et s'étend presque jusqu'au fond de la chambre de chauffage 36. Ladite conduite est, de préférence, en résine époxy. La canne de chauffage 24, dont le raccord électrique 38 est situé à l'extérieur de la chambre 36, est disposée à l'intérieur de cette chambre, sensiblement jusqu'au fond du doigt de gant 17. Sa résistance 39 est enroulée autour de la partie d'extrémité de la conduite d'alimentation 22.

La conduite d'échappement 23 est entourée d'un tube sous vide 40, tube s'étendant de l'extérieur de la chambre de chauffage 36, à travers la bride 20, sensiblement jusqu'à l'extrémité du manchon d'isolation 37. De même, l'orifice de la conduite d'échappement 23 est placée sensiblement au niveau de l'extrémité du manchon d'isolation 37.

On peut distinguer deux zones dans la chambre de chauffage 36 : une zone extérieure isolée 41 couverte par le col 6, les parois 3, 4, 5 et le manchon d'isolation 37, et une zone intérieure non-isolée 42.

L'installation fonctionne de la façon suivante :

Quand la pression de l'hélium 2 dans le réservoir 1 est suffisamment haute, dans la limite permise par la soupape de sécurité 8, la pression dans la conduite 15 est aussi suffisamment haute pour que la vanne 35 ferme la conduite 33. En conséquence, il n'y a pas de gaz de chauffage introduit dans la chambre de chauffage 36. Les entrées de chaleur sont diminuées par la faible conduction des matériaux, le chemin thermique prolongé par l'isolation 37 et la paroi médiane 5 refroidie à l'hélium.

Si du gaz est consommé au poste d'utilisation 9, du fluide est évacué du réservoir 1. Le gaz est conduit par les conduites 7 et 10 au réchauffeur 11, où il est chauffé à la température ambiante, passe à travers les vannes 12, 13 et le filtre 14, puis arrive dans la conduite 15.

Du fait de ce soutirage , la pression baisse dans le réservoir 1. La canne électrique 24 est en fonctionnement normal alimentée par le réseau électrique, sous la commande de moyens (non représentés) commandés par la pression. Le chauffage de l'intérieur de la chambre de chauffage 36 est alors effectué par la résistance 39 de cette canne, quand la pression dans le réservoir tombe au-dessous d'un seuil prédéterminé.

Si la résistance 39 ne fonctionne pas, en cas de coupure électrique par exemple, la pression continue à baisser, de sorte que la pression baisse également dans le dôme de pilotage de la vanne 35. Quand la pression descend sous un seuil prédéterminé, le dôme ouvre la vanne 35, ce qui permet le passage du gaz de chauffage. Du gaz de chauffage s'échappe alors des bouteilles 29 et, après détente dans le détendeur 30, circule dans la conduite 31.

Le gaz traverse la vanne 32 et la vanne piloté 35 et circule par la conduite 33 et la vanne d'alimentation 34 puis dans la conduite d'alimentation 22, d'où il parvient dans la chambre de chauffage 36.

Le gaz de chauffage apporte alors de la chaleur dans la section qui n'est pas couverte par le manchon d'isolation 37, à travers la paroi du doigt de gant 17, ce qui chauffe l'hélium 2 contenu dans le réservoir cryogénique 1. Ceci a pour résultat que la pression dans le réservoir 1 augmente.

Lorsque, du fait de l'alimentation continue de la chambre de chauffage 36 avec du gaz de chauffage, la pression dans la chambre augmente au-dessus d'un certain seuil, le gaz de chauffage s'échappe par l'intermédiaire de la conduite d'échappement 23, du serpentin réchauffeur 27, de la vanne d'évacuation 26 et de la soupape d'évacuation 25.

Quand la pression dans le réservoir 1 et en conséquence dans la conduite 15 a augmenté suffisamment, le dôme de la vanne 35 arrête la circulation du gaz de chauffage dans la conduite 33.

Ainsi, le chauffage est arrêté et la pression du réservoir ne monte plus, sauf du fait des entrées de chaleur, qui sont très faibles.

L'utilisation d'un tel dispositif effectue ainsi d'une façon simple, économique et automatique le chauffage du réservoir 1 en cas de coupure de courant. Pour maximiser la chaleur cédée à l'hélium du réservoir 1, la sortie de la conduite d'alimentation 22 et l'entrée de la conduite d'échappement 23 sont éloignées l'une de l'autre. Dans le même but, la conduite d'alimentation 22 n'est pas munie d'une isolation thermique, contrairement à la conduite d'échappement 23.

## Revendications

1. Dispositif de réglage de pression pour un réservoir (1) d'un fluide cryogénique, notamment d'hélium, qui comprend une chambre de chauffage (36) s'étendant à travers la paroi (3, 4, 5) du réservoir et reliée à cette paroi, caractérisé en ce que la chambre de chauffage (36) est fermée et le dispositif comprend une conduite d'alimentation (22) adaptée pour alimenter la chambre de chauffage (36) avec un fluide de chauffage ayant une température supérieure à la température dudit fluide cryogénique, et une conduite d'échappement (23) destinée à l'évacuation du fluide de chauffage de la chambre, chacune desdites conduites (22, 23) traversant une paroi extérieure (20) de la chambre de chauffage (36).

2. Dispositif selon la revendication 1, caractérisé en ce qu'il comprend une vanne pilotée (35) insérée dans la conduite d'alimentation (22) et reliée par sa partie de commande à une conduite d'utilisation (15) du fluide du réservoir de façon à ouvrir la vanne pilotée (35) lorsque la pression dans le réservoir (1) tombe au-dessous d'un seuil prédéterminé.

3. Dispositif selon l'une des revendications 1 ou 2, caractérisé en ce qu'il comprend des seconds moyens de chauffage (24), notamment des résistances électriques.

4. Dispositif selon la revendication 3, caractérisé en ce que les seconds moyens de chauffage (24) sont insérés dans la chambre de chauffage (36), de préférence au voisinage de la sortie de la conduite d'alimentation (22).

5. Dispositif selon l'une quelconque des revendications 1 à 4, caractérisé en ce qu'un manchon d'isolation (37) est ménagé sur la paroi intérieure (4) du réservoir (1), autour d'une section médiane de la chambre de chauffage (36), divisant la chambre de chauffage (36) en une zone extérieure isolée (41) et une zone intérieure non-isolée (42).

6. Dispositif selon la revendication 5, caractérisé en ce que la sortie de la conduite d'alimentation (22) se trouve dans la zone non-isolée (42), au voisinage de l'extrémité intérieure de la chambre de chauffage (36).

7. Dispositif selon l'une des revendications 5 ou 6 caractérisé en ce que l'entrée de la conduite d'échappement (23) se trouve dans la zone non-isolée (42), au voisinage de la zone isolée (41).

8. Dispositif selon l'une quelconque des revendications 1 à 7, caractérisé en ce que la conduite d'échappement (23) est revêtue de moyens d'isolation thermique (40), qui s'étendent de l'extérieur de la chambre de chauffage (36) à travers sa paroi extérieure (20) et sensiblement jusqu'à l'entrée de cette conduite (23).

9. Dispositif selon l'une quelconque des revendications 1 à 8, caractérisé en ce que le gaz de chauffage a, dans ses conditions d'utilisation, un point de rosée inférieur à la température du fluide cryogénique contenu dans le réservoir (1).

10. Dispositif suivant la revendication 9, caractérisé en ce que le fluide cryogénique et le gaz de chauffage sont constitués par de l'hélium.

11. Dispositif selon l'une des revendications 1 à 10, caractérisé en ce que les conduites (22, 23) sont composées d'un matériau mauvais conducteur thermique, notamment de résine époxy.

12. Installation de fourniture d'un fluide, comprenant un réservoir (1) pour ce fluide, sous forme cryogénique, équipé d'un dispositif de chauffage selon l'une des revendications 1 à 11, une conduite d'utilisation (15) reliant le réservoir à un poste d'utilisation (9), et une source de gaz (29) de chauffage reliée par une conduite d'alimentation (31, 33) au dispositif de chauffage.
